# EUROPÄISCHE PATENTSCHRIFT

(11) **EP 0 970 770 B1**
(45) Veröffentlichungstag und Bekanntmachung des Hinweises auf die Patenterteilung: **12.06.2002**
(21) Anmeldenummer: 99112389.4
(22) Anmeldetag: 29.06.1999
(51) Int. Cl.: B23B 41/12

(54) **Einrichtung sowie Verfahren zur Bearbeitung von Bohrungen**
Apparatus and method for working drill holes
Dispositif et procédé pour l'usinage d'un alésage

(30) Priorität: 10.07.1998 DE 19830903
(43) Veröffentlichungstag der Anmeldung: 12.01.2000
(73) Patentinhaber: Gebr. Heller Maschinenfabrik GmbH, D-72622 Nürtingen (DE)
(72) Erfinder: Kurz, Artur, 73240 Wendlingen (DE)
(74) Vertreter: Jackisch-Kohl, Anna-Katharina

(56) Entgegenhaltungen:
- EP-A- 0 552 425
- US-A- 5 209 615

## Beschreibung

Die Erfindung betrifft eine Einrichtung nach dem Oberbegriff des Anspruches 1 sowie die Verwendung einer solchen Einrichtung in einem Verfahren zur Bearbeitung von Bohrungen in einem Werkstück nach dem Oberbegriff des Anspruches 15.

Es ist bekannt, mit Werkzeugen axial mit Abstand hintereinander angeordnete Bohrungen in einem Werkstück spanabhebend zu bearbeiten. Da die Bohrungen oft gleichen Durchmesser aufweisen, koaxial zueinander angeordnet und die Werkzeugschneiden fest eingestellt sind, ist das Einführen des Werkzeuges in die Bohrungen aufwendig und schwierig.

Es ist ein Verfahren und eine Bohrstange für Nockenwellen-Lagerbohrungen bekannt (EP-A-0 552 425), bei dem eine einzige Schneide an der Spitze der Bohrstange nacheinander sämtliche aufeinanderfolgenden Lagerbohrungen bearbeitet. Hinter der Schneide sind mindestens auf halber Länge der Bohrstange Führungsleisten angeordnet, die im Durchmesser nicht größer oder nur wenig kleiner als der von der Schneide bearbeitete Werkstückdurchmesser sind.

Es ist ferner eine Einrichtung zur Führung einer Bohrungstange bekannt, mit der Nockenwellenbohrungen bearbeitet werden (US-A-5 209 615). Die Führungselemente oder Führungsbuchsen für die Bohrstange werden mit radial sich erstreckenden Ansätzen verschraubt, die in entsprechenden Öffnungen des Werkstückes positioniert und fixiert werden.

Der Erfindung liegt die Aufgabe zugrunde, die gattungsgemäße Einrichtung und das gattungsgemäße Verfahren so auszubilden, daß das Werkzeug zur Bearbeitung der Bohrungen bei einfacher konstruktiver Gestaltung einfach in das Werkstück eingefahren werden kann und die Bohrungen im ziehenden Schnitt und damit ohne Rückzugsriefen bei unveränderlich fester räumlicher Zuordnung von Werkstück und Führungslager bearbeitet werden können.

Diese Aufgabe wird bei der gattungsgemäßen Einrichtung erfindungsgemäß mit den kennzeichnenden Merkmalen des Anspruches 1 und bei der gattungsgemäßen Verwendung erfindungsgemäß mit den kennzeichnenden Merkmalen des Anspruches 15 gelöst.

Das erfindungsgemäße Werkzeug wird im Führungslager geführt und zentriert. Die für die Bearbeitung der Bohrung vorgesehenen Schneiden liegen in Höhe der Profilierungen des Führungslagers, so daß die Schneiden nicht mit dem Führungslager in Berührung kommen. Das Werkzeug wird beim erfindungsgemäßen Verfahren exzentrisch in die Bohrungen und durch den Innenring des Führungslagers geschoben. Infolge der Profilierungen des Werkzeuges und/oder des Führungslagers kommt es bei diesem Einfahrvorgang nicht zu einer Kollision der Schneiden mit dem Innenring des Führungslagers oder den vorbearbeiteten Bohrungsabschnitten. Da die Bohrungsachse und die Führungslagerachse unverändert koaxial zueinander bleiben, ergibt sich eine einfache konstruktive Gestaltung der erfindungsgemäßen Einrichtung.

Weitere Merkmale bevorzugter Ausführungsformen der Erfindung ergeben sich aus den weiteren Ansprüchen, der Beschreibung und den Zeichnungen.

Ausführungsbeispiele der Erfindung werden anhand einiger Zeichnungen näher erläutert. Es zeigen
- Fig. 1: teilweise in Ansicht und teilweise im Schnitt ein als Bohrstange ausgebildetes Werkzeug einer erfindungsgemäßen Einrichtung, das in ein zu bearbeitendes Werkstück eingefahren ist und in bezug auf Führungslager bzw. zu bearbeitende Werkstückbohrungen exzentrisch angeordnet ist,
- Fig. 2: einen Teil des Werkzeuges gemäß Fig. 1 in vergrößerter Darstellung,

- Fig. 3: in vergrößerter Darstellung einen Schnitt längs der Linie III-III in Fig. 1,
- Fig. 4: eine Ansicht in Richtung der Linie IV-IV in Fig. 1,
- Fig. 5: in einer Darstellung entsprechend Fig. 1 das Werkzeug in einer axial verstellten Lage während der Bearbeitung des Werkstückes,
- Fig. 6: in vergrößerter Darstellung einen Ausschnitt des Werkzeuges gemäß Fig. 5,
- Fig. 7: in vergrößerter Darstellung einen Schnitt durch das Werkzeug, das in bezug auf die Stellung gemäß Fig. 3 um seine Achse gedreht worden ist,
- Fig. 8: das Werkzeug am Ende der Werkstückbearbeitung,
- Fig. 9: in vergrößerter Darstellung einen Ausschnitt des Werkzeuges gemäß Fig. 8,
- Fig. 10: in einer Darstellung entsprechend Fig. 1 eine zweite Ausführungsform eines Werkzeuges,
- Fig. 11: in einer Darstellung entsprechend Fig. 1 eine weitere Ausführungsform eines Werkzeuges,
- Fig. 12: in einer Darstellung entsprechend Fig. 1 eine weitere Ausführungsform eines Werkzeuges,
- Fig. 13 bis Fig. 16: jeweils im Radialschnitt unterschiedliche Stellungen des Werkzeuges gemäß Fig. 12.

Mit dem im folgenden beschriebenen Werkzeug werden mehrere Bohrungen in einem Werkstück gleichzeitig bearbeitet. Das Werkzeug hat einen Grundkörper 1, der über seine Länge verteilt angeordnete Schneiden 2 bis 5 trägt. Mit ihnen werden koaxial zueinander liegende Bohrungen 6 bis 9 in einem Werkstück 10 gleichzeitig bearbeitet. Die Bohrungen 6 bis 9 sind in Stegen 11 bis 14 des Werkstükkes 10 vorgesehen, die mit Abstand voneinander liegen. Außerhalb des Werkstückes 10 sind mit Abstand von den endseitigen Stegen 11 und 14 Führungslager 15, 16 für das Werkzeug vorgesehen.

Der Grundkörper 1 des Werkzeuges ist zylindrisch ausgebildet und wird über einen Spannkegel 17 oder sonstigen Verbindungselementen mit einer (nicht dargestellten) Arbeitsspindel in bekannter Weise drehfest verbunden. Mit der Arbeitsspindel wird das Werkzeug zur Bearbeitung der Bohrungen 6 bis 9 um seine Achse rotierend angetrieben.

Das Werkzeug weist zusätzlich zu den Schneiden 2 bis 5 Auflageleisten 19, 20 auf, mit denen das Werkzeug während der Bearbeitung des Werkstückes 10 durch die Schneiden 2 bis 5 in den Führungslagern 15, 16 abgestützt wird. Die Auflageleisten 19, 20 sind dementsprechend so lang, daß die Abstützung in den Führungslagern 15, 16 während der Bearbeitung sämtlicher Bohrungen 6 bis 9 des Werkstückes 10 gewährleistet ist. Da zwei Führungslager 15, 16 vorgesehen sind, weist der Grundkörper 1 im Bereich jedes Führungslagers entsprechende Auflageleisten 19, 20 auf.

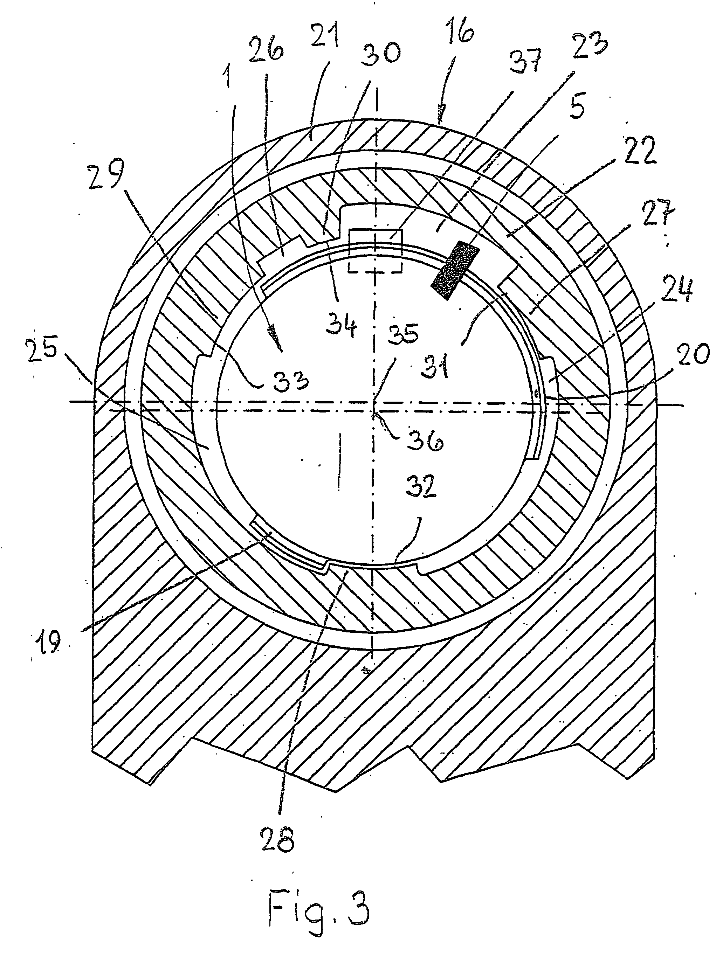

Die beiden Führungslager 15, 16 sind gleich ausgebildet. Aus diesem Grunde wird anhand von Fig. 3 nur das Führungslager 16 näher beschrieben. Das Führungslager hat einen Außenring 21, in dem über (nicht dargestellte) Wälzkörper ein Innenring 22 drehbar ist. Die Innenwandung des Innenringes 22 weist verschiedene Taschen 23 bis 26 auf, die sich über die axiale Länge des Innenringes 22 erstrecken. Die Taschen werden durch über die Länge des Innenringes 22 sich erstreckende Stege 27 bis 30 voneinander getrennt. Die Stirnseiten 31 bis 34 der Stege 27 bis 30 liegen auf einem gemeinsamen Zylindermantel mit der Achse 35. Die Tasche 23 erstreckt sich über einen Winkelbereich von etwa 55°. Die benachbarte Tasche 24 ist wesentlich breiter und erstreckt sich über einen Winkelbereich von etwa 90°. Für die Tasche 25 ist ein Winkelbereich von etwa 90° und für die Tasche 26 ein Winkelbereich von etwa 20° vorgesehen. Die Stirnseiten 31 bis 33 der Stege 27 bis 29 erstrecken sich jeweils über einen Winkelbereich von etwa 30°, während die Stirnseite 34 des Steges 30 eine Winkelbreite von etwa 15° hat.

Die Taschen 23 bis 26 sind vorgesehen, damit das Werkzeug mit seinem Grundkörper 1 und den darauf befindlichen Schneiden 2 bis 5 und den Auflageleisten 19, 20 mit radialem Versatz durch die Führungslager 15, 16 gefahren werden kann. Der Grundkörper 1 ist in bezug auf den Innenring 22 der Führungslager 15, 16 entsprechend ausgerichtet.

Fig. 3 zeigt die Stellung des Innenringes 22 sowie des Grundkörpers 1, wenn das Werkzeug in die beiden Führungslager 15, 16 eingefahren wird. Der Grundkörper 1 ist in bezug auf die Innenringe 22 der Führungslager 15, 16 radial versetzt, so daß die Achse 36 des Grundkörpers 1 einen Versatz in bezug auf die Achse 35 des Innenringes 22 aufweist. Die Auflageleiste 19 des Grundkörpers 1 greift beim Einfahren in die Führungslager 15, 16 in die Tasche 25 des Innenringes 22 ein. Die Schneiden 2 bis 5 liegen in Höhe der Tasche 23 der beiden Führungslager 15, 16. Abgesehen von der Auflageleiste 19 liegt der Grundkörper 1, in Axialrichtung gesehen, innerhalb des von den Stirnseiten 31 bis 34 der Stege 27 bis 30 bestimmten Zylindermantels. In dieser Stellung des Innenringes 22 und des Werkzeuges kann der Grundkörper 1 ohne Gefahr einer Kollision mit den Innenringen 22 von einer Seite des Werkstückes 10 aus durch die zu bearbeitenden Bohrungen 6 bis 9 und die beiden Führungslager 15, 16 eingeschoben werden.

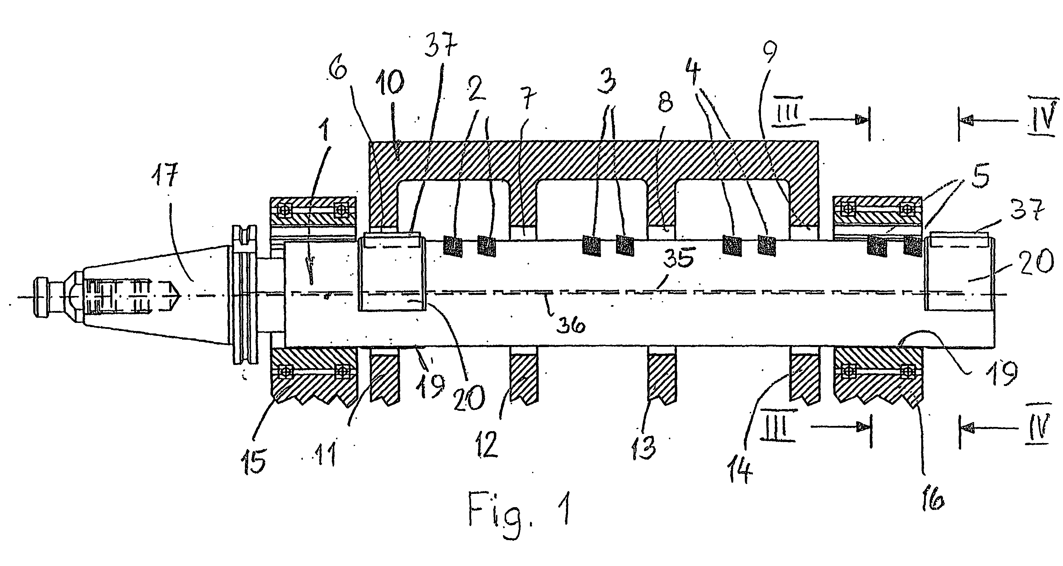

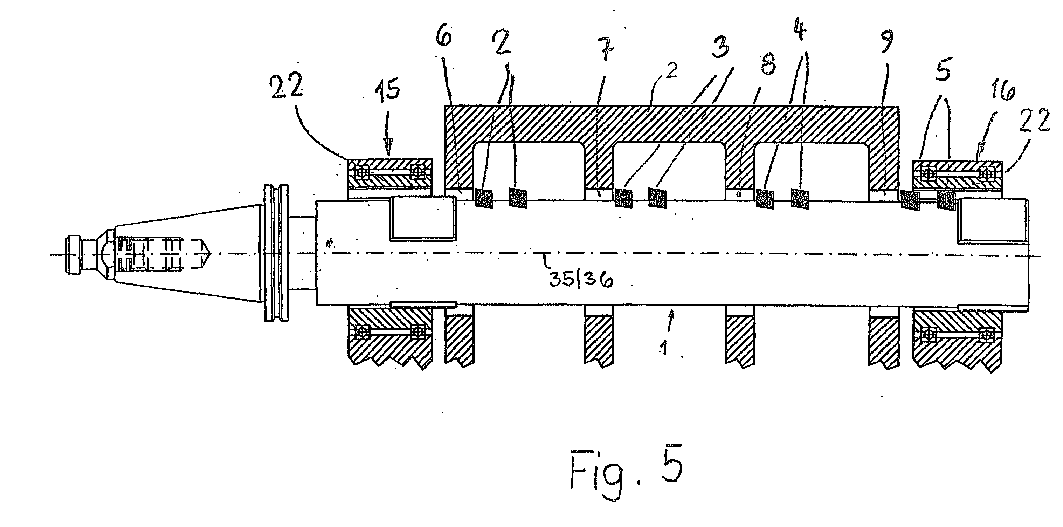

Der Grundkörper 1 ist außerdem mit einem Mitnehmer 37 versehen (Fig. 3), der radial über den Grundkörper 1 des Werkzeuges ragt und sich vorteilhaft gleich weit axial erstreckt wie die Auflagen 19, 20. Beim Einfahren des Grundkörpers 1 in die Innenringe 22 der Führungslager 15, 16 gelangt der Mitnehmer 37 ebenfalls in den Bereich der Tasche 23, in die auch die Schneiden beim Einfahren des Werkzeuges eingreifen. In dieser Einfahrlage haben, wie sich aus Fig. 3 ergibt, die Schneiden 2 bis 5 und der Mitnehmer 37 radialen Abstand vom Boden der Tasche 23. Das Werkzeug wird so weit eingefahren, bis die Auflageleisten 19, 20 und die Mitnehmer 37 außerhalb der Führungslager 15, 16 liegen (Fig. 1). Sobald diese in Fig. 1 dargestellte Einfahrlage des Werkzeuges erreicht ist, wird das Werkzeug geringfügig radial so weit versetzt, daß die Werkzeugachse 36 mit der Achse 35 des Innenringes 22 der Führungslager 15, 16 zusammenfällt (Fig. 5). In dieser Stellung hat der Grundkörper 1 des Werkzeuges Abstand vom Innenring 22. Der radiale Versatz ist kleiner als der Abstand, den die Schneiden 2 bis 5 und die Mitnehmer 37 vom Boden der Tasche 23 haben, so daß bei diesem radialen Versatz eine Beschädigung dieser Teile ausgeschlossen ist.

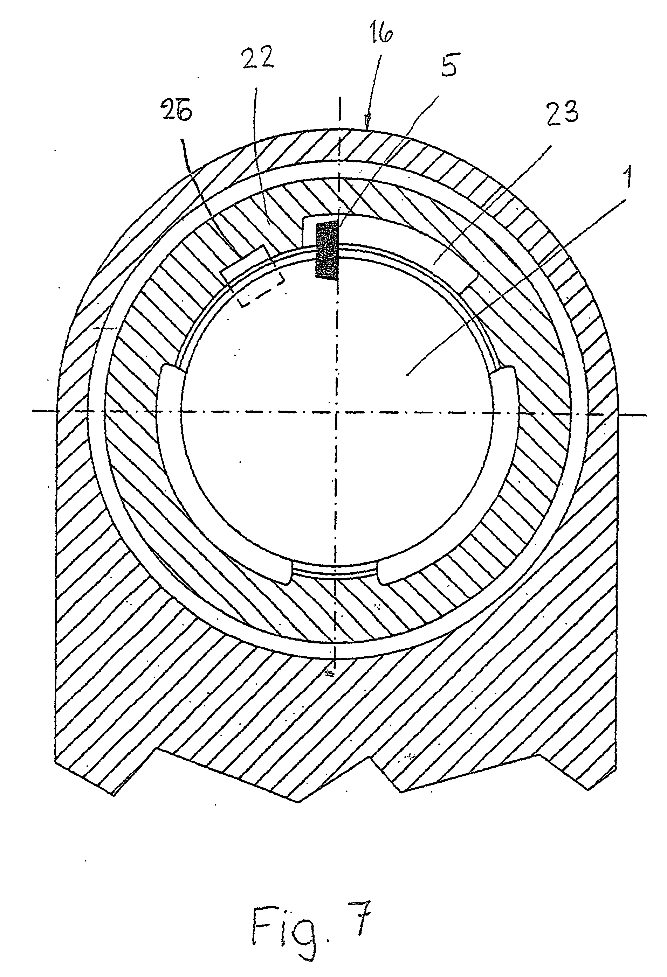

Anschließend wird das Werkzeug um seine Achse 36 so weit gedreht, bis der Mitnehmer 37 in Höhe der Tasche 26 liegt (Fig. 7), in Achsrichtung des Innenringes 22 gesehen. Bei diesem Drehvorgang und anschließendem Zurückfahren des Werkzeuges bzw. des Grundkörpers 1 gelangen die Auflageleisten 19, 20 auf die Stirnseiten 31 bis 34 der Stege 27 bis 30. Die Auflageleisten 20 erstrecken sich über einen größeren Winkelbereich als die Auflageleisten 19. Die Auflageleisten 19, 20 haben jeweils eine Auflageseite, die entsprechend den Stirnseiten 31 bis 34 der Stege 27 bis 29 gekrümmt ist. In der in Fig. 7 dargestellten Lage des Grundkörpers 1 wird das Werkzeug axial zurückgefahren, wobei die Schneiden 2 bis 5 die Bohrungen 6 bis 9 des Werkstückes 10 vorzugsweise in ziehendem Schnitt bearbeiten. Die Mitnehmer 37 greifen formschlüssig in die Taschen 26 der Innenringe 22 der beiden Führungslager 15, 16 ein. Dadurch werden die Innenringe 22 vom rotierenden Werkzeug drehend mitgenommen.

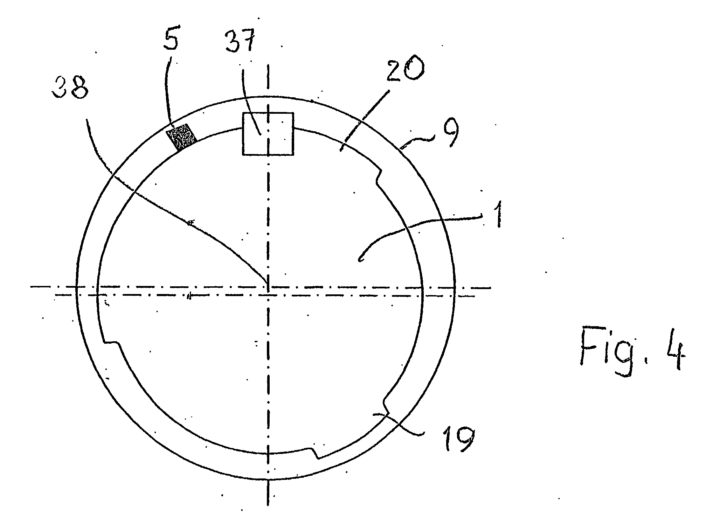

Wie sich aus Fig. 4 ergibt, sind die Werkstückbohrungen 6 bis 9 im Durchmesser größer als der größte Außendurchmesser des Werkzeuges 1. Dadurch kann das Werkzeug mit seinem Grundkörper 1 problemlos durch die Bohrungen 6 bis 9 des Werkstückes 10 eingefahren werden, auch wenn es den radialen Versatz in bezug auf die Innenringe 22 der Führungslager 15, 16 hat. Die Innenringe 22 liegen hierbei koaxial zur Achse 38 der Bohrungen 6 bis 9.

Sobald das Werkzeug in das Werkstück 10 eingefahren ist (Fig. 1), wird es in der beschriebenen Weise radial versetzt, so daß seine Achse 36 mit der Achse 38 der Bohrungen 6 bis 9 zusammenfällt. Der radiale Versatz des Werkzeuges kann über die Antriebsspindel der Maschine gesteuert erfolgen. Es ist aber auch möglich, eine Verstelleinrichtung zu verwenden, wie sie in der deutschen Patentanmeldung 197 20 823.1 erläutert ist.

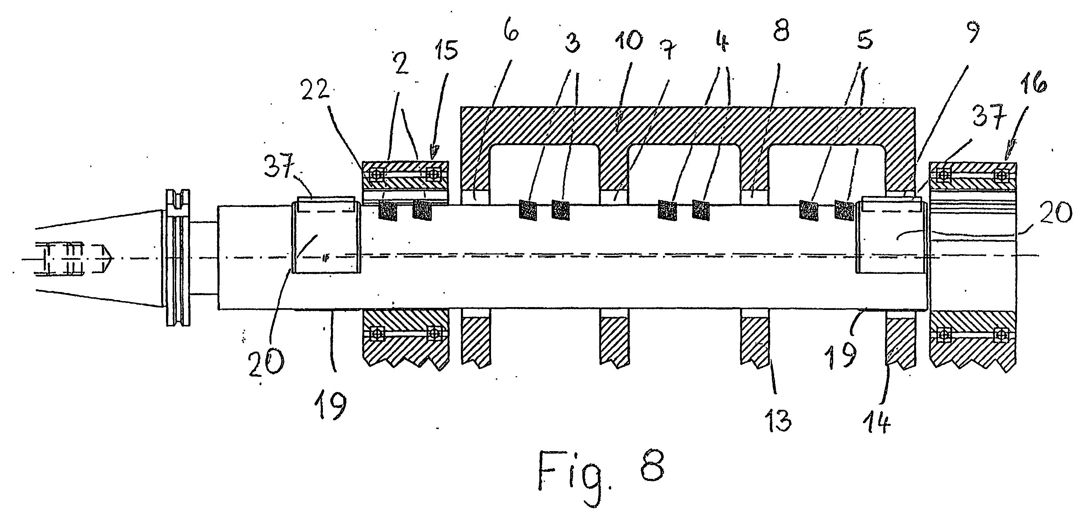

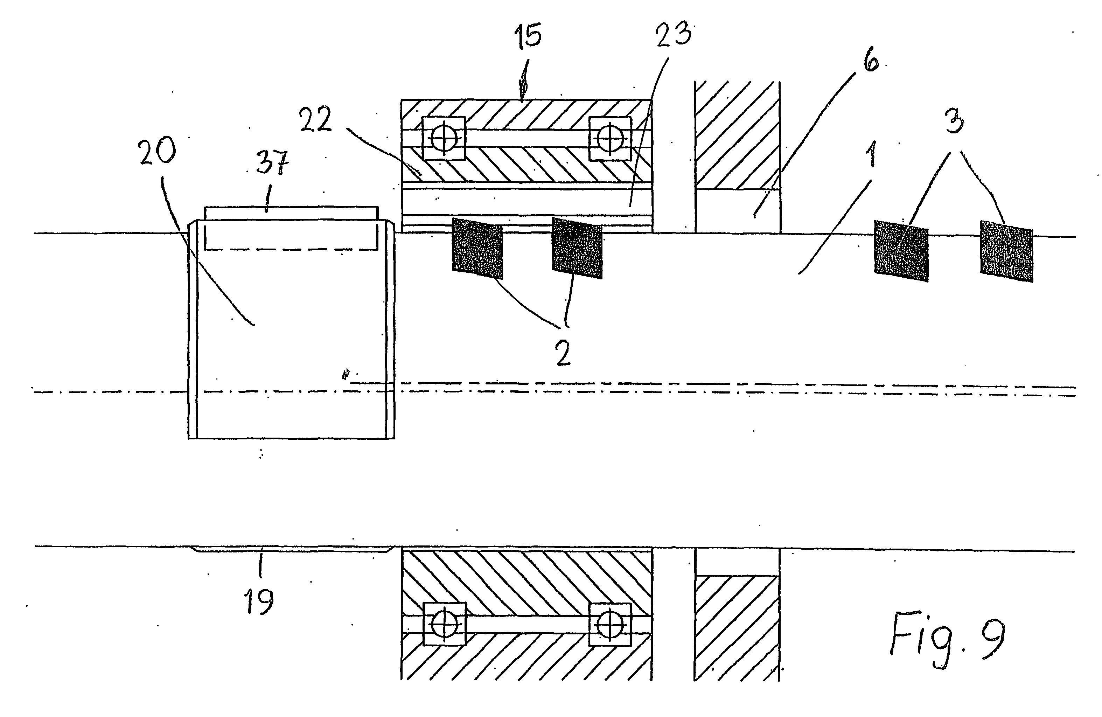

Die Zentrierung des Grundkörpers 1 erfolgt in den Innenringen 22 der Führungslager 15, 16. Das Werkzeug wird rotierend angetrieben und axial verschoben. Dabei bearbeiten die Schneiden 2 bis 5 die Bohrungen 6 bis 9. Fig. 5 zeigt das Werkzeug in einer Lage, in der die Schneiden 2 bis 5 unmittelbar vor den zu bearbeitenden Bohrungen 6 bis 9 liegen. Wie Fig. 7 zeigt, befinden sich die Schneiden 2 bis 5, in Achsrichtung des Innenringes 22 gesehen, in Höhe der Tasche 23 des Innenringes 22 benachbart zu einer Seitenwand der Tasche 23. Das Werkzeug läßt sich zuverlässig im Führungslager 15, 16 axial verschieben, ohne daß die Schneiden 2 bis 5 mit dem Innenring 22 der Führungslager 15, 16 in Berührung kommen. Fig. 8 zeigt die Stellung, die das Werkzeug einnimmt, nachdem sämtliche Bohrungen 6 bis 9 des Werkstückes 10 durch die Schneiden 2 bis 5 gleichzeitig bearbeitet worden sind. Nunmehr befinden sich die Schneiden 2 innerhalb des Innenringes 22 des Führungslagers 15, während die Schneiden 6 im Bereich zwischen den beiden Stegen 13 und 14 des Werkstückes 10 liegen. In diesem Falle liegen die Schneiden 2 im Bereich der Tasche 23 des Innenringes 22 des Führungslagers 15 (Fig. 9). In dieser Lage befinden sich die Auflageleisten 19, 20 im Bereich außerhalb der Führungslager 15, 16. Damit liegen auch die über diese Auflageleisten vorstehenden Mitnehmer 37 im Bereich außerhalb der beiden Führungslager 15 und 16.

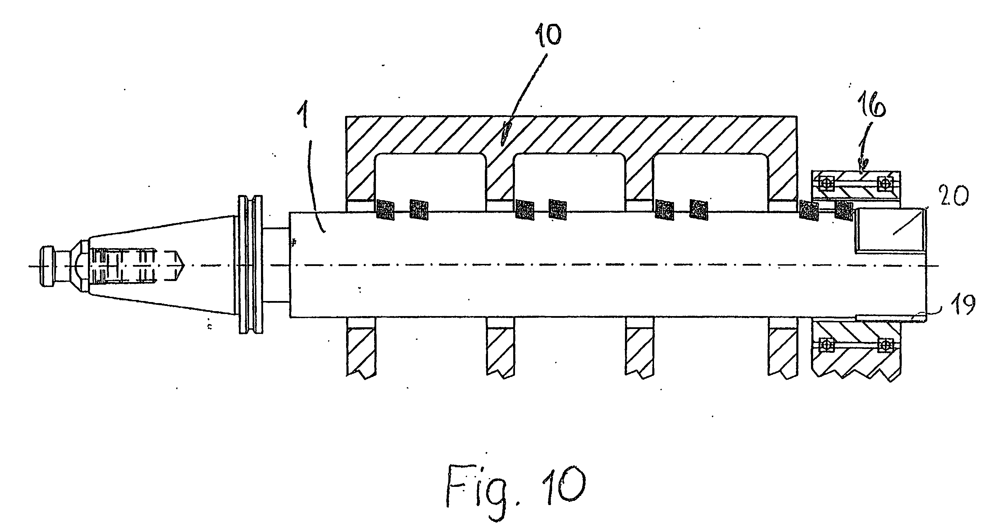

Fig. 10 zeigt ein Ausführungsbeispiel, bei dem zur Zentrierung und Abstützung des Werkzeuges 1 nur das im Bereich außerhalb des zu bearbeitenden Werkstückes 10 befindliche Führungslager 16 vorgesehen ist. Es ist gleich ausgebildet wie das Führungslager der vorigen Ausführungsform. Da nur das Führungslager 16 vorgesehen ist, hat der Grundkörper 1 lediglich die an seinem freien Ende angeordneten Auflageleisten 19, 20.

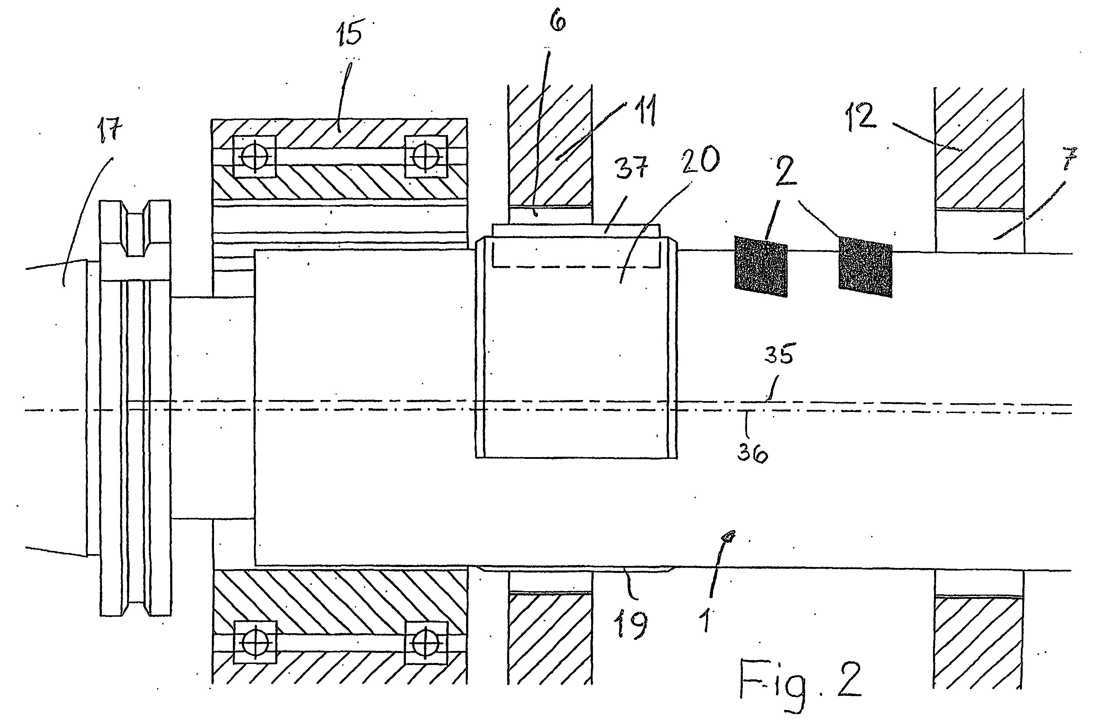

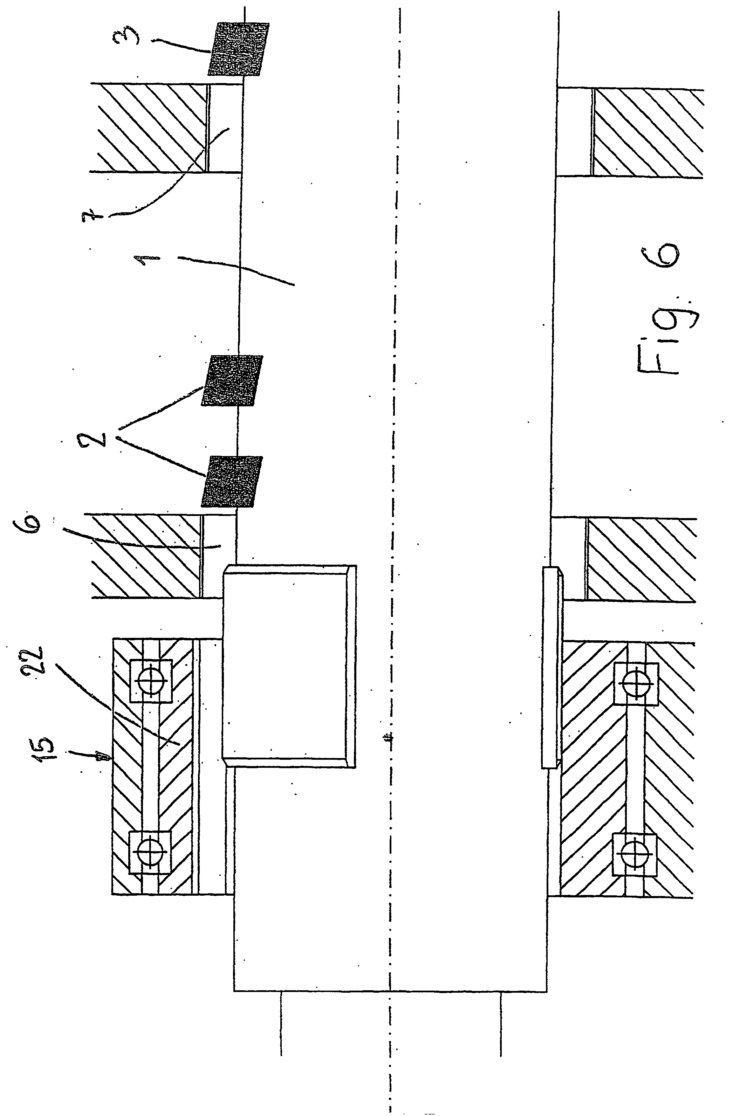

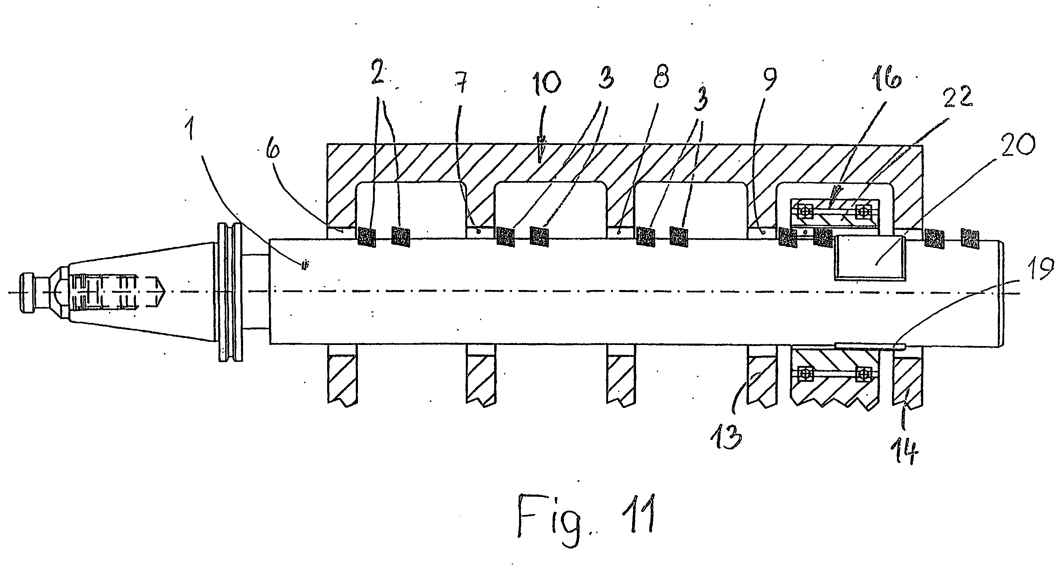

Beim Ausführungsbeispiel nach Fig. 11 befindet sich das einzige Führungslager 16 im Bereich zwischen den Stegen 13 und 14 des Werkstückes 10. Im übrigen ist dieses Führungslager 16 gleich ausgebildet wie bei den vorigen Ausführungsbeispielen. Das Werkzeug 1 wird, wie dies anhand der Fig. 1 bis 9 erläutert worden ist, zunächst exzentrisch durch die zu bearbeitenden Bohrungen 6 bis 9 des Werkstückes und durch den Innenring 22 des Führungslagers 16 geschoben. Der Grundkörper 1 ist hierbei so in bezug auf das Führungslager ausgerichtet, daß die Auflageleisten 19, 20 und die Schneiden 2 bis 5, in Achsrichtung des Werkzeuges gesehen, innerhalb der Taschen 23 und 25 (Fig. 3) des Innenringes 22 des Führungslagers 16 liegen. Da die Bohrungen 6 bis 9 einen Durchmesser haben, der größer ist als der größte wirksame Außendurchmesser des Werkzeuges (Fig. 4), kommen weder die Schneiden 2 bis 5 noch die Auflageleisten 19, 20 noch der Mitnehmer 37 mit der Bohrungswandung in Berührung. Das Werkzeug wird entsprechend den vorherigen Ausführungsbeispielen so weit axial eingeschoben, bis die Auflageleisten 19, 20 außerhalb des Führungslagers 16 liegen. Dann wird das Werkzeug in der beschriebenen Weise um seine Achse so weit gedreht, bis der Mitnehmer 37 in Höhe der Tasche 26 (Fig. 3) des Innenringes 22 des Führungslagers 16 liegt. Anschließend wird das Werkzeug in der beschriebenen Weise radial versetzt, so daß seine Achse mit der Achse des Innenringes 22 zusammenfällt. Nunmehr kann das Werkzeug, wie anhand der vorigen Ausführungsformen beschrieben, axial zurückgefahren werden. Der Mitnehmer 37 greift hierbei in die Tasche 26 ein, wodurch eine drehfeste Verbindung zwischen dem Grundkörper 1 des Werkzeuges und dem Innenring 22 des Außenlagers 16 hergestellt wird.

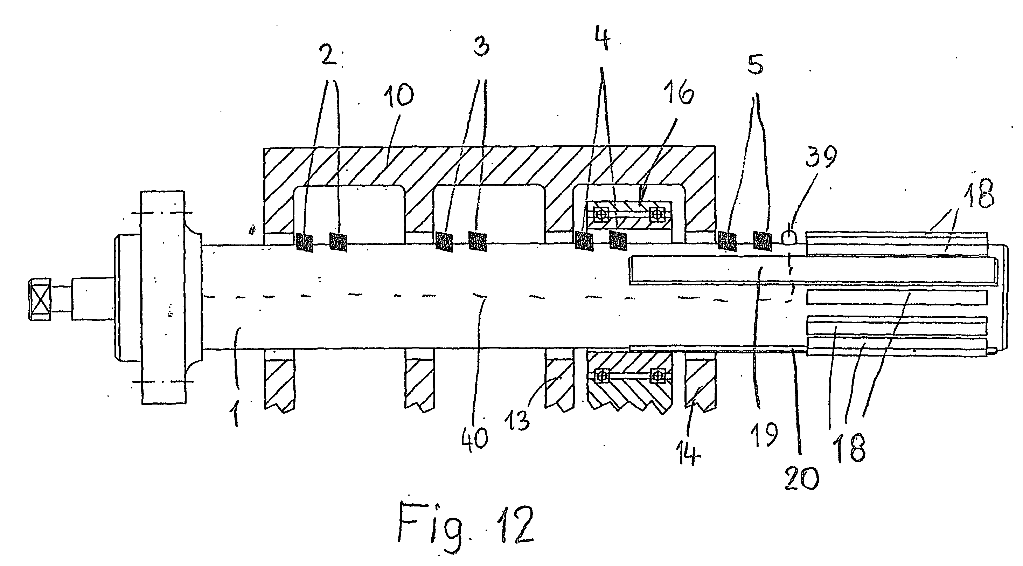

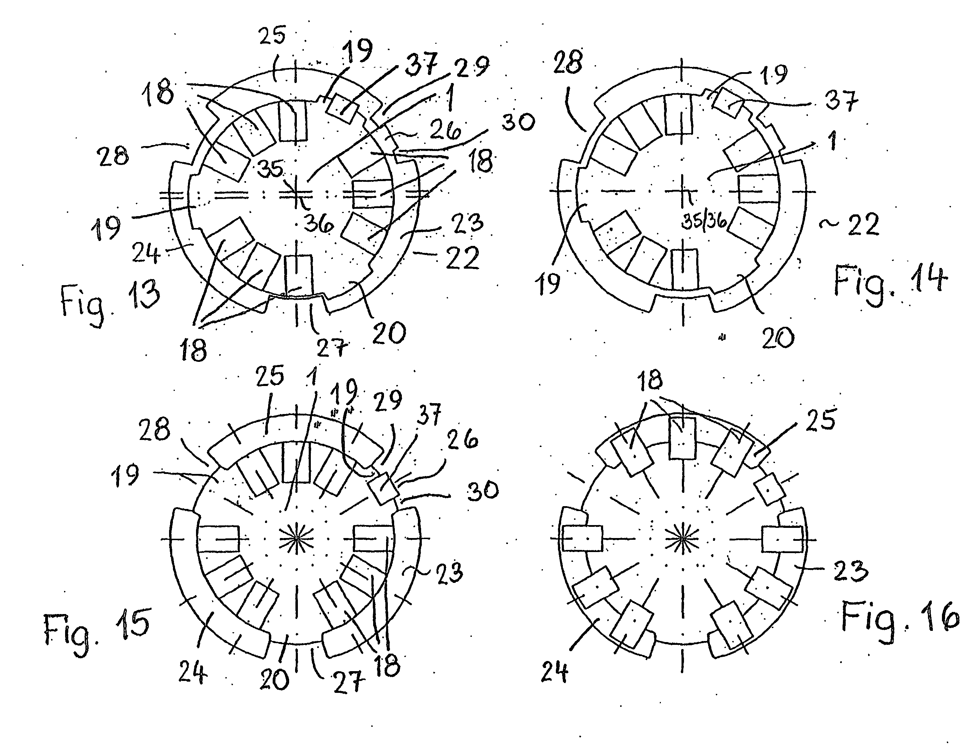

Die Fig. 12 bis 16 zeigen ein Werkzeug, das zusätzlich zu den Schneiden 2 bis 5 Honleisten 18 aufweist, die, wie die Fig. 13 bis 16 zeigen, über den Umfang des Grundkörpers 1 verteilt angeordnet sind. Im dargestellten Ausführungsbeispiel sind jeweils drei Honleisten 18 zu einer Gruppe zusammengefaßt. Über den Umfang des Grundkörpers 1 sind drei solcher Gruppen gleichmäßig verteilt angeordnet. Die Honleisten 18 werden in bekannter Weise radial ein- und ausgefahren. Da die entsprechenden Stelleinrichtungen bei Honwerkzeugen bekannt sind, sind sie in den Zeichnungen nicht dargestellt und werden auch nicht näher beschrieben. Die Honleisten 18 sind am freien Ende des Grundkörpers 1 des Werkzeuges vorgesehen. Der Mitnehmer 37 liegt zwischen zwei benachbarten Honleistengruppen und ist im dargestellten Ausführungsbeispiel annähernd doppelt so lang wie die Honleisten 18. Sie können auch in einem Werkzeugträgerkörper angeordnet sein, der mit dem Grundkörper 1 über eines der bekannten Schnellspannsysteme lösbar verbunden ist.

Im Unterschied zu den vorigen Ausführungsbeispielen ist der Grundkörper 1 an seinem freien Ende mit drei radial vorstehenden Auflageleisten 19, 20 versehen, die über den Umfang des Grundkörpers gleichmäßig verteilt angeordnet und gleich lang sind. Über eine dieser Auflageleisten 19 steht der Mitnehmer 37 radial vor.

Beim Einfahren des Werkzeuges in das Werkstück 10 und in das Führungslager 16 sind die Honleisten 18 radial zurückgefahren, so daß sie nicht über den Grundkörper 1 des Werkzeuges vorstehen. Der Innenring 22 des Führungslagers 16 ist gleich ausgebildet wie bei den vorigen Ausführungsbeispielen und hat die Taschen 23 bis 26, die durch die Stege 27 bis 30 voneinander getrennt sind. Fig. 13 zeigt die Lage des Werkzeuges 1 beim Einfahren in die Bohrungen 5 und 6 sowie in das Führungslager 16. Das Werkzeug nimmt eine solche Lage ein, daß die Auflageleisten 19, 20 und der Mitnehmer 37 in Höhe der Taschen 23, 24, 25 des Innenringes 22 des Führungslagers 16 liegen, in Achsrichtung gesehen. Dadurch läßt sich das Werkzeug mühelos durch das Führungslager 16 bewegen, ohne daß die Schneiden 2 bis 5, die Auflageleisten 19, 20 und der Mitnehmer 37 mit dem Innenring 22 kollidieren. In dieser Lage ist die Achse 36 des Grundkörpers 1 gegenüber der Achse 35 des Innenringes 22 des Führungslagers 16 radial versetzt. Sobald das Werkzeug vollständig in das Werkstück 10 eingefahren ist, wird durch Radialverstellen des Werkzeuges dessen Achse 36 mit der Achse 35 des Innenringes zur Deckung gebracht (Fig. 14). Bei diesem radialen Versatz befindet sich der Mitnehmer 37, wie dies anhand der vorigen Ausführungsbeispiele beschrieben ist, noch außerhalb des Führungs m(/Ulagers 16. Anschließend wird das Werkzeug 1 um seine Achse so weit gedreht, daß der Mitnehmer 37 in Höhe der Tasche 26 liegt (Fig. 15). In dieser Stellung kann nunmehr das Werkzeug 1 axial verfahren werden, wobei der Mitnehmer 37 in die Tasche 26 eingreift und auf diese Weise eine drehfeste Verbindung zum Innenring 22 des Außenlagers 16 herstellt. Durch weiteres Axialverfahren des Werkzeuges 1 werden mit den Schneiden 2 bis 5 die Bohrungen 6 bis 9 des Werkstückes 10 spanabhebend bearbeitet. Während dieser Bearbeitung sind die Honleisten 18 radial zurückgezogen (Fig. 15).

Nach Beendigung der spanabhebenden Bearbeitung durch die Schneiden 2 bis 5 werden die Honleisten 18 in bekannter Weise radial ausgefahren (Fig. 16). Das Werkzeug 1 kann nunmehr axial verfahren werden, wobei die Honleisten 18 die zuvor mit den Schneiden 2 bis 5 bearbeiteten Bohrungen 6 bis 9 honen. Da sich die Honleisten 18, in Achsrichtung gesehen, in Höhe der Taschen 23 bis 25 befinden (Fig. 16) und sie, in Achsrichtung gesehen, Abstand vom Boden der Taschen haben, kann das Werkzeug mit den ausgefahrenen Honleisten 18 durch den Innenring 22 des Führungslagers 16 verfahren werden.

Das Führungslager 16 befindet sich im Bereich zwischen den Stegen 13 und 14 des Werkstückes 10 (Fig. 12). Zur Abstützung und Zentrierung des Werkstückes 1 kann aber auch eine Anordnung des oder der Führungslager entsprechend den Fig. 1 bis 10 vorgesehen sein. Das Werkzeug 1 liegt sowohl bei der Bearbeitung des Werkstückes 10 durch die Schneiden 2 bis 5 als auch durch die Honleisten 18 mit den Auflageleisten 19, 20 auf den Stirnseiten der Stege 27 bis 30 flächig auf (Fig. 15 und 16). Mit dem Werkzeug gemäß den Fig. 12 bis 16 kann in einem Durchgang das Werkstück 10 spanabhebend bearbeitet und gehont werden.

Der Grundkörper 1 trägt ein Meßwerkzeug 39 (Fig. 12), dessen Abstand von der Achse 36 des Grundkörpers 1 geringfügig kleiner ist als der Radius des von der Fertigschneide beschriebenen Flugkreises. Das Meßwerkzeug 39 ist nach Art eines Rückschlagventiles ausgebildet, das an eine Druckluftzuführung 40 angeschlossen ist, die innerhalb des Grundkörpers 1 verläuft. Die Druckluftzuführung 40 ist an eine Druckluftquelle angeschlossen, die bei Bearbeitungsmaschinen zur Verfügung steht. Das Meßwerkzeug 39 hat eine kalottenförmige Stirnseite.

Nach der Fertigbearbeitung der Bohrungen 5 und 6 wird die Spindel gestoppt und axial verschoben. Hierbei wird das Meßwerkzeug 39 durch die verschiedenen Bohrungen 6 bis 9 hindurchgeführt. Sind die Schneiden 2 bis 5 während der Bearbeitung der Bohrungen 5 und 6 in Ordnung gewesen, haben die Bohrungen den gewünschten Durchmesser, so daß eine Berührung zwischen dem Meßwerkzeug 39 und der Bohrungswandung nicht stattfindet. Der eingestellte Druck in der Druckluftzuführung 40 bleibt unverändert. War eine der Schneiden 2 bis 5 beschädigt, zum Beispiel ausgebrochen, hat die von dieser Schneide bearbeitete Bohrung im Bearbeitungsbereich dieser Schneide einen zu kleinen Durchmesser. Dadurch kommt es beim Verfahren des Werkzeuges zu einer Berührung zwischen dieser Bohrungswandung und dem Meßwerkzeug 39. Dabei wird das Meßwerkzeug 39 nach unten gedrückt und auf diese Weise die Druckluftzuführung 40 geöffnet. Die kalottenförmige Ausbildung der Stirnseite des Meßwerkzeuges 39 erleichtert in einem solchen Fall das Verschieben des Werkzeuges 10 und des Meßwerkzeuges 39. Aufgrund der geöffneten Druckluftzuführung 40 fällt der Druck in der Druckluftzuführung ab. Der Druckabfall kann von einem Druckschalter festgestellt werden. Gleichzeitig wird der axiale Weg des Grundkörpers 1 überwacht, so daß durch Abfragen des Druckschalters festgestellt werden kann, bei welchem Axialweg des Werkzeuges der Druckabfall erfolgt ist. Dadurch läßt sich einfach feststellen, an welcher Bohrung des Werkstückes 10 eine Nachbearbeitung vor dem Honen erforderlich ist.

Das Meßwerkzeug 39 kann auch bei den zuvor beschriebenen Werkzeugen vorgesehen werden, die nicht mit Honleisten versehen sind. Das Meßwerkzeug 39 arbeitet nach Art einer Lehre, mit der einfach und dennoch zuverlässig die von den Schneiden 2 bis 5 bearbeiteten Bohrungen 6 bis 9 überprüft werden können.

Anstelle des Meßwerkzeuges 39 kann auch ein Meßwerkzeug eingesetzt werden, welches das Istmaß der jeweiligen Bohrung mißt. Dieser Istwert kann mit dem Sollwert verglichen werden. Es können auch noch andere, an sich bekannte Meßwerkzeuge für diesen Fall eingesetzt werden. Insbesondere können sämtliche bei von Meßdornen her bekannte Meßsysteme verwendet werden. Eine Verschleißkompensation der Schneiden 2 bis 5 kann entsprechend den gemessenen Werten erfolgen, wie dies beispielsweise in der deutschen Patentanmeldung 197 17 835.9 beschrieben ist.

Da die Honleisten 18 lediglich im Bereich der Taschen 23 bis 25 des Innenringes 22 vorgesehen sind, kann ein solches Honwerkzeug in Verbindung mit einem solchen Führungslager 16 eingesetzt werden. Ein Umspannen auf eine zweite Vorrichtung oder eine zweite Maschine für den Honvorgang ist nicht erforderlich.

Mit den beschriebenen Werkzeugen ist es möglich, eine ziehende Bearbeitung vorzunehmen und damit Rückzugsriefen am Werkstück 10 zu vermeiden. Mit dem Werkzeug können sehr hohe Bearbeitungsgenauigkeiten erzielt werden, insbesondere im Hinblick auf die Koaxialität der Bohrungen 6 bis 9. Mit den beschriebenen Werkzeugen werden äußerst geringe Lage- und/oder Formabweichungen der einzelnen Bohrungen 6 bis 9 erreicht. Die Schneiden 2 bis 5 und die Auflageleisten 19, 20 sowie die Mitnehmer 37 sind unbewegliche Teile, so daß für sie ein aufwendiger Verstellmechanismus nicht erforderlich ist. Die Taschen 23 bis 26 im Innenring 22 der Führungslager 15, 16 gewährleisten, daß trotz der starren Anordnung dieser Bauteile das Werkzeug mit den Schneiden, den Auflageleisten und den Mitnehmern durch die Führungslager gefahren werden kann. Aufgrund des Fehlens beweglicher Elemente am Werkzeug in der rauhen Umgebung bei der Bearbeitung bzw. Zerspanung wird eine sehr hohe Wiederholgenauigkeit und Betriebssicherheit erreicht.

## Patentansprüche

1. Einrichtung, bestehend aus wenigstens einem Führungslager und einem Werkzeug mit einem Grundkörper, der Schneiden zur Bearbeitung von Bohrungen in einem Werkstück trägt, die koaxial zueinander angeordnet sind,
**dadurch gekennzeichnet, daß** Werkzeug und Führungslager (15, 16) derart profiliert sind, daß sowohl eine Führung und Zentrierung während der Bearbeitung als auch ein störungsfreies, seitlich versetztes Ein- bzw. Ausfahren des Werkzeugs in die bzw. aus der Werkstückbohrung (6 bis 9) und das Führungslager (15, 16) möglich ist, wobei Bohrungsachse (38) und Führungslagerachse (35) dabei unverändert koaxial zueinander bleiben können.

2. Einrichtung nach Anspruch 1,
**dadurch gekennzeichnet, daß** das Werkzeug mindestens eine, vorzugsweise mehrere über den Umfang des Grundkörpers (1) verteilt angeordnete, radial vorstehende Auflagen (19, 20) hat, deren Länge so gewählt ist, daß das Werkzeug über seinen maximalen Verfahrweg bei der Werkstückbearbeitung im Führungslager (15, 16) abgestützt ist.

3. Einrichtung nach Anspruch 1 oder 2,
**dadurch gekennzeichnet, daß** das Werkzeug über die Auflage (19, 20) im Führungslager (15, 16) zentriert ist.

4. Einrichtung nach einem der Ansprüche 1 bis 3,
**dadurch gekennzeichnet, daß** die Auflagen (19, 20; 27 bis 30) am Werkzeug bzw. am Führungslager (15, 16) leistenförmig ausgebildet sind.

5. Einrichtung nach einem der Ansprüche 1 bis 4,
**dadurch gekennzeichnet, daß** der Grundkörper (1) mindestens einen, vorzugsweise radial über die Auflage (19, 20) vorstehenden Mitnehmer (37) aufweist, mit dem er drehfest mit einem Innenring (22) des Führungslagers (15, 16) verbindbar ist.

6. Einrichtung nach einem der Ansprüche 1 bis 5,
**dadurch gekennzeichnet, daß** das Werkzeug außer den Schneiden (2 bis 5) zusätzlich mit Honleisten (18) versehen ist, die vorteilhaft am freien Ende des Grundkörpers (1) vorgesehen sind.

7. Einrichtung nach Anspruch 6,
**dadurch gekennzeichnet, daß** die Honleisten (18) in einem Werkzeugträgerkörper angeordnet sind, der mit dem Grundkörper (1) über eines der bekannten Schnellspannsysteme lösbar verbunden ist, und daß vorzugsweise eine Stelleinrichtung für die Honleisten (18) im Grundkörper (1) untergebracht ist.

8. Einrichtung nach Anspruch 6 oder 7,
**dadurch gekennzeichnet, daß** die Honleisten (18) gruppenweise angeordnet sind, wobei vorteilhaft zwischen wenigstens zwei Gruppen von Honleisten (18) die Auflage (19, 20) angeordnet ist.

9. Einrichtung nach einem der Ansprüche 1 bis 8,
**dadurch gekennzeichnet, daß** das Führungslager (15, 16) einen Innenring (22) aufweist, der in seiner Innenwandung wenigstens eine, vorzugsweise über seinen Umfang verteilt mehrere taschenförmige Vertiefungen (23 bis 25) und im Bereich außerhalb der Vertiefung (23 bis 25) wenigstens eine Erhöhung (27 bis 30) aufweist, und daß vorzugsweise die Tiefe der Vertiefung (23 bis 25) größer ist als der radiale Überstand der Schneiden (2 bis 5) und der ausgefahrenen Honleisten (18) in der Bearbeitungsstellung des Werkzeuges.

10. Einrichtung nach Anspruch 9,
**dadurch gekennzeichnet, daß** der Innenring (22) in seiner Innenwandung wenigstens eine weitere Vertiefung (26) aufweist, in die der Mitnehmer (37) des Grundkörpers (1) in der Bearbeitungsstellung des Werkzeuges formschlüssig eingreift.

11. Einrichtung nach Anspruch 9 oder 10,
**dadurch gekennzeichnet, daß** das Werkzeug in der Bearbeitungsstellung mit seiner Auflage (19, 20) auf der Erhöhung (27 bis 30) des Innenringes (22) aufliegt.

12. Einrichtung nach einem der Ansprüche 1 bis 11,
**dadurch gekennzeichnet, daß** das Werkzeug mit mindestens einem, vorteilhaft nahe dem freien Ende des Grundkörpers (1) vorgesehenen Meßelement (39) zur Prüfung des Durchmessers der Bohrungen (6 bis 9) versehen ist.

13. Einrichtung nach Anspruch 12,
**dadurch gekennzeichnet, daß** das Meßelement (39) Teil eines Rückschlagventiles ist und vorteilhaft über den Grundkörper (1) radial vorsteht und kalottenförmig ausgebildet und insbesondere an eine durch den Grundkörper (1) verlaufende Druckleitung (40) angeschlossen ist.

14. Einrichtung nach einem der Ansprüche 1 bis 12,
**dadurch gekennzeichnet, daß** außer den Bohrungsdurchmessern auch Planflächen bearbeitet werden können, und daß vorzugsweise dieselbe Stelleinrichtung für die Planflächenbearbeitung und die Aussteuerung der Honleisten (18) verwendet wird.

15. Verwendung einer Einrichtung nach einem der Ansprüche 1 bis 14, in einem Verfahren zur Bearbeitung von Bohrungen in einem Werkstück bei dem das Werkzeug axial in die Bohrungen eingeführt und anschließend mit den Schneiden des rotierenden Werkzeuges die Bohrungen bearbeitet werden,
**dadurch gekennzeichnet, daß** das Werkzeug exzentrisch in die Bohrungen (6 bis 9) eingeführt und exzentrisch durch einen Innenring (22) wenigstens eines Führungslagers (15, 16) geschoben wird, und daß das Werkzeug so in bezug auf den Innenring (22) ausgerichtet wird, daß die Schneiden (2 bis 5) und die Auflagen (19, 20), in Achsrichtung des Innenringes (22) gesehen, in Höhe von Vertiefungen (23 bis 25) des Innenringes (22) liegen.

16. Verfahren nach Anspruch 15,
**dadurch gekennzeichnet, daß** das Werkzeug so weit durch den Innenring (22) geschoben wird, daß die Auflage (19, 20) außerhalb des Innenringes (22) liegt, und daß danach das Werkzeug vorteilhaft so weit um seine Achse (36) gedreht wird, daß seine Auflage (19, 20) auf der Erhöhung (27, 30) des Innenringes (20) aufliegt und die Schneiden (2 bis 5), in Achsrichtung gesehen, weiterhin in Höhe der Vertiefung (23 bis 25) liegen.

17. Verfahren nach Anspruch 16,
**dadurch gekennzeichnet, daß** das Werkzeug vor oder nach oder gleichzeitig mit dem Drehen radial so weit verstellt wird, daß seine Achse (36) mit der Achse (35, 38) des Innenringes (22) des Führungslagers (15, 16) und der Werkstückbohrung (6 bis 9) zusammenfällt, und daß vorzugsweise der Mitnehmer (27), in Achsrichtung gesehen, in Höhe der weiteren Vertiefung (26) des Innenringes (22) liegt.

18. Verfahren nach Anspruch 16 oder 17,
**dadurch gekennzeichnet, daß** über den Mitnehmer (27) der Innenring (22) des Führungslagers (15, 16) drehend mitgenommen wird.

19. Verfahren nach einem der Ansprüche 15 bis 18,
**dadurch gekennzeichnet, daß** die Bohrungen (6 bis 9) nach der spanabhebenden Bearbeitung gehont werden, und daß vorteilhaft der Honvorgang ohne Werkzeugwechsel und Umspannen des Werkstückes (10) vorgenommen wird.

20. Verfahren nach einem der Ansprüche 15 bis 19,
**dadurch gekennzeichnet, daß** die Bearbeitung der Bohrungen (6 bis 9) ziehend vorgenommen wird.

21. Verfahren nach einem der Ansprüche 15 bis 20,
**dadurch gekennzeichnet, daß** der Durchmesser der vorbearbeiteten Bohrungen (6 bis 9), der mit den Schneiden (2 bis 5) bearbeiteten Bohrungen (6 bis 9) und der mit den Honleisten (18) gehonten Bohrungen (6 bis 9) mittels des Meßelementes (39) vorzugsweise vor dem Honen geprüft werden kann.

## Claims

1. Apparatus, consisting of at least one guide-bearing and one tool with a basic body, supporting cutters for machining of bores in a workpiece, which are arranged coaxially to each other,
**characterised in that** tool and guide bearing (15, 16) are profiled in such a way that both guiding and centering is possible during machining as well as a trouble-free, laterally shifted entering and exiting into and out of the bore (6 to 9) of the workpiece and the guide bearing (15, 16), whereby the bore axis (38) and guide bearing axis (35) can remain unchanged coaxially to each other during this procedure.

2. Apparatus according to claim 1,
**characterised in that** the tool has at least one, advantageously a number of radially projecting supports (19, 20), spread over the perimeter of the basic body (1), whose length is chosen in a way that the tool is supported over the maximum course while machining the workpiece in the guide bearing (15, 16).

3. Apparatus according to claim 1 or 2,
**characterised in that** the tool is centered via the support (19, 20) within the guide bearing (15, 16).

4. Apparatus according to one of claims 1 to 3,
**characterised in that** the supports (19, 20; 27 to 30) on the tool or on the guide bearing (15, 16) are gib-shaped.

5. Apparatus according to one of the claims 1 to 4,
**characterised in that** the basic body (1) comprises at least one driver (37), preferably projecting radially over the support (19, 20), with which it is connectable in a non-rotatable manner with an inner ring (22) of the guide bearing (15, 16).

6. Apparatus according to one of the claims 1 to 5,
**characterised in that** the tool, apart from the cutters (2 to 5) is provided additionally with honing bars (18) which are advantageously attached to the free end of the basic body (1).

7. Apparatus according to claim 6,
**characterised in that** the honing bars (18) are arranged within a tool support body, which is detachably connected to the basic body (1) via one of the well-known quick action clamping systems and **in that** preferably an adjusting device for the honing bars (18) is contained in the basic body (1).

8. Apparatus according to claim 6 or 7,
**characterised in that** the honing bars (18) are arranged in groups, whereby advantageously the support (19, 20) is arranged between at least two groups of honing bars (18).

9. Apparatus according to one of the claims 1 to 8,
**characterised in that** the guide bearing (15, 16) comprises an inner ring (22) which contains in its interior wall at least one, advantageously a number of pocket-like deepenings (23 to 25) spread over its perimeter and in the area outside the deepening (23 to 25) at least one elevation (27 to 30), and **in that** preferably the depth of the deepening (23 to 25) is bigger than the radial projection of the cutters (2 to 5) and the expanded honing bars (18) in the machining position of the tool.

10. Apparatus according to claim 9,
**characterised in that** the inner ring (22) contains in its interior wall at least one deepening (26) which meshes form-fit with the driver (37) of the basic body (1) in the machining position of the tool.

11. Apparatus according to claim 9 or 10,
**characterised in that** the tool is suspended in the machining position with its support (19; 20) on the elevation (27 to 30) of the inner ring (22).

12. Apparatus according to one of the claims 1 to 11,
**characterised in that** the tool is provided with at least one measuring element (39), advantageously located near the free end of the basic body (1) to check of the diameter of the borings (6 to 9).

13. Apparatus according to claim 9,
**characterised in that** the measuring element (39) is part of a reflux valve and advantageously projects radially over the basic body (1) and is dome-shaped and, in particular, is connected to a pressure pipe (40) passing through the basic body (1).

14. Apparatus according to one of the claims 1 to 12,
**characterised in that** apart from the bore diameters, also plane surfaces can be machined and **in that** preferably the same adjusting means for the machining of plane surfaces and the expansion of the honing bars (18) is used.

15. A method for machining the bores in a workpiece by employing an apparatus according to one of the claims 1 to 14, in which the tool is inserted axially into the bores and after which the bores are machined with the cutters of the rotating tool,
**characterised in that** the tool is inserted excentrically into the bores (6 to 9) and is pushed excentrically through an inner ring (22) of at least one guide bearing (15, 16) and **in that** the tool is aligned with regard to the inner ring (22) so that the cutters (2 to 5) and the supports (19; 20), seen in the direction of the axis of the inner ring (22), are positioned at the level of the deepenings (23 to 25) of the inner ring (22).

16. Method according to claim 15,
**characterised in that** the tool is pushed so far through the inner ring (22) that the support (19, 20) is positioned outside the inner ring (22), and **in that** afterwards the tool is advantageously rotated so far around its axis (36) that its support (19, 20) is laid on at the elevation (27; 30) of the inner ring (22) and the cutters (2 to 5), seen in the direction of the axis, are furthermore positioned at the level of the deepenings (23 to 25).

17. Method according to claim 16,
**characterised in that** before or after or simultaneously with the turning the tool is adjusted radially so far that its axis (36) coincides with the axis (35, 36) of the inner ring (22) of the guide bearing (15, 16) and the bore of the workpiece (6 to 9) and **in that** preferably the driver (27), seen in the direction of the axis, is positioned at the level of the additional deepening (26) of the inner ring (22).

18. Method according to claim 16 or 17,
**characterised in that** via the driver (27) the inner ring (22) of the guide bearing (15, 16) is taken along while rotating at the same time.

19. Method according to one of the claims 15 to 18,
**characterised in that** the bores (6 to 9) are honed after chip producing machining and that advantageously the honing operation can take place without tool changing and further clamping of the workpiece (10).

20. Method according to one of the claims 15 to 19,
**characterised in that** the machining of the bores (6 to 9) takes place while pulling.

21. Method according to one of the claims 15 to 20,
**characterised in that** the diameter of the pre-machined bores (6 to 9), the bores machined with the cutters (2 to 5) and the bores (6 to 9) honed with the honing bars (18) can be checked by means of the measuring element (39) preferably before honing.

## Revendications

1. Dispositif, comprenant au moins un palier de guidage et un outil avec un corps de base qui porte des coupes pour usiner des alésages dans une pièce, lesquels sont disposés coaxialement l'un à l'autre, **caractérisé en ce que** l'outil et le palier de guidage (15, 16) sont profilés de telle manière que non seulement un guidage et centrage pendant l'usinage est possible mais encore l'entrée respectivement la sortie dans respectivement lors de l'alésage de pièce (6 à 9) et du palier de guidage (15, 16) latéralement déplacées sans perturbation et de plus l'axe du trou (38) et l'axe de palier de guidage (35) peuvent rester inchangés coaxialement l'un par rapport à l'autre.

2. Dispositif selon revendication 1,
**caractérisé en ce que** l'outil a au moins un, de préférence plusieurs supports (19, 20) distribués sur la circonférence du corps de base (1) faisant saillie radiale, dont la longueur est choisie de telle façon que l'outil est supporté sur son cours de voie maximal dans l'usinage de la pièce dans le palier de guidage (15, 16).

3. Dispositif selon revendication 1 ou 2,
**caractérisé en ce que** l'outil est centré sur le support (19, 20) dans le palier de guidage (15, 16).

4. Dispositif selon une des revendications 1 à 3,
**caractérisé en ce que** les supports (19, 20; 27 à 30) sont construits à l'outil ou encore au palier de guidage en forme de liteau.

5. Dispositif selon une des revendications 1 à 4,
**caractérisé en ce que** le corps de base (1) comprend au moins un toc (37), de préférence faisant saillie radiale sur le support (19, 20), avec qui il peut être connecté de façon à empêcher toute rotation avec un collier intérieur (22) du palier de guidage (15, 16).

6. Dispositif selon une des revendications 1 à 5,
**caractérisé en ce que** l'outil est muni en plus des coupes (2 à 5) additionellement de barres de brunissage (18), lesquelles sont avantageusement prévues dans l'extrémité libre du corps de base (1).

7. Dispositif selon revendication 6,
**caractérisé en ce que** les barres de brunissage (18) sont disposées dans un corps porteur outil lequel est connecté de façon démontable sur un des systèmes de fixation rapide connus avec le corps de base (1) et **en ce que** dans le corps de base (1) un dispositif de mise au point pour les barres de brunissage (18) de préférence est aménagé.

8. Dispositif selon revendication 6 ou 7,
**caractérisé en ce que** les barres de brunissage (18) sont disposées par groupe, le support (19, 20).étant avantageusement disposé entre au moins deux groupes de barres de brunissage (18).

9. Dispositif selon une des revendications 1 á 8,
**caractérisé en ce que** le palier de guidage (15, 16) comprend un collier intérieur (22) qui présente dans sa paroi intérieur au moins une, de préférence plusieurs cavités en forme de poche (23 á 25) distribuées sur sa circonférence et dans la zone au dehors de la cavité (23 á 25) au moins un relèvement (27 à 30) et **en ce que** de préférence la profondeur de la cavité (23 á 25) est plus grande que le dépassement radial des coupes (2 á 5) et des barres de brunissage (18) en expansion dans la position d'usinage de l'outil.

10. Dispositif selon revendication 9,
**caractérisé en ce que** le collier intérieur (22) comprend dans sa paroi intérieure au moins une cavité (26) supplémentaire dans laquelle le toc (37) du corps de base (1) s'adopte congrûment dans la position de l'usinage de l'outil.

11. Dispositif selon revendication 9 ou 10,
**caractérisé en ce que** l'outil dans la position de l'usinage avec son support (19; 20) est posé sur le relèvement (27 à 30) du collier intérieur (22).

12. Dispositif selon une des revendications 1 à 11,
**caractérisé en ce que** l'outil est muni d'au moins un élément de mesure (39) avantageusement disposé près de l'extrémité libre du corps de base (1) pour vérification du diamètre des alésages (6 á 9).

13. Dispositif selon revendication 12,
**caractérisé en ce que** l'élément de mesure (39) fait partie d'une soupape de contrecoup et saille avantageusement de façon radiale sur le corps de base (1) et est construit en forme de calotte et connecté en particulier à une conduite forcée (40), passant par le corps de base (1).

14. Dispositif selon une des revendications 1 à 12,
**caractérisé en ce que** en plus des diamètres des alésages aussi des surfaces de plans peuvent être usinées et **en ce que** de préférence le même dispositif de mise au point pour l'usinage des surfaces de plans et par l'expansion des barres de brunissage (18) est employé.

15. Procédé pour l'usinage d'alésages dans une pièce à travailler en employant un dispositif selon une des revendications 1 à 14, dans lequel l'outil est introduit axialement dans les alésages et ensuite les alésages sont usinés avec les coupes de l'outil tournant,
**caractérisé en ce que** l'outil est introduit excentriquement dans les alésages (6 á 9) et est poussé excentriquement par un collier intérieur (22) d'au moins un palier de guidage (15, 16), et **en ce que** l'outil est aligné de telle façon par rapport au collier intérieur que les coupes (2 à 5) et les supports (19, 20), vus en direction de l'axe du collier intérieur (22) sont placés à hauteur de cavités (23 à 25) du collier intérieur (22).

16. Procédé selon revendication 15,
**caractérisé en ce que** l'outil est poussé aussi loin par le collier intérieur (22) que le support (19, 20) est situé en dehors du collier intérieur (22) et **en ce que** l'outil est ensuite tourné avantageusement aussi loin sur son axe (36) que son support (19, 20) est posé sur le relèvement (27, 30) du collier intérieur (22) et que les coupes (2 à 5), vues en direction de l'axe, continuent à être situées á l'hauteur de la cavité (23 à 25).

17. Procédé selon revendication 16,
**caractérisé en ce que** l'outil est déplacé radialement avant ou après ou simultanément avec l'opération de tournage aussi loin que son axe (36) converge avec l'axe (35, 38) du collier intérieur (22) du palier de guidage (15, 16) et de l'alésage de la pièce à travailler (6 à 9) et **en ce que** le toc (27), vu en direction de l'axe, est placé à hauteur de l'autre cavité (26) du collier intérieur (22).

18. Procédé selon revendication 16 ou 17,
**caractérisé en ce que** au moyen du toc (27) le collier intérieur (22) du palier de guidage (15, 16) est entraîné dans un mouvement tournant.

19. Procédé selon une des revendications 15 á 18,
**caractérisé en ce que** les alésages (6 à 9) sont brunis après l'usinage à enlèvement de copeaux, et **en ce que** l'opération de brunissage est avantageusement entreprise sans changement d'outil et change de serrage de la pièce à travailler (10).

20. Procédé selon une des revendications 15 à 19,
**caractérisé en ce que** l'usinage des alésages (6 à 9) se fait en tirant.

21. Procédé selon une des revendications 15 à 20, **caractérisé en ce que** le diamètre des alésages préusinés (6 à 9), des alésages usinés avec les coupes (2 à 5) et des alésages (6 à 9) brunis avec les barres de brunissage (18) peut être vérifié à l'aide de l'élément de mesure (39) de préférence avant le brunissage.
